# EUROPÄISCHE PATENTSCHRIFT

(11) **EP 0 898 941 B1**
(45) Veröffentlichungstag und Bekanntmachung des Hinweises auf die Patenterteilung: **02.04.2003**
(21) Anmeldenummer: 98112583.4
(22) Anmeldetag: 07.07.1998
(51) Int. Cl.: A61C 1/07, A61C 3/06, A61C 3/03

(54) **Medizinisches oder dentalmedizinisches Handstück mit einem Werkzeug zur spanabhebenden Bearbeitung**
Medical or dental handpiece with a cutting tool
Pièce à main médicale ou dentaire munie d'un outil de coupe

(30) Priorität: 20.08.1997 DE 19736240
(43) Veröffentlichungstag der Anmeldung: 03.03.1999
(73) Patentinhaber: KALTENBACH & VOIGT GmbH & Co., 88400 Biberach/Riss (DE)
(72) Erfinder: Hugo, Burkhard, Dr., 97265 Hettstadt (DE); Mössle, Walter, 88441 Mittelbiberach (DE)
(74) Vertreter: Schmidt-Evers, Jürgen, Dipl.-Ing.

(56) Entgegenhaltungen:
- WO-A-95/21583
- DE-A- 4 211 625
- GB-A- 2 074 077
- US-A- 4 353 696
- US-A- 5 010 906
- US-A- 5 423 102

## Beschreibung

Die Erfindung bezieht sich auf ein medizinisches oder dentalmedizinisches Handstück mit einem Werkzeug oder Werkzeug für ein medizinisches oder dentalmedizinisches Handstück zur spanabhebenden Bearbeitung von Körbergewebe oder einem Ersatzmaterial nach dem Oberbegriff des Anspruches 1 oder 15.

In der WO 96/14024 ist ein Werkzeug beschrieben, dessen abrasiver Bearbeitungsabschnitt seitlich und stirnseitig wirksam und geeignet ist, bei oszillierendem Antrieb die dem Werkzeug durch ein dentales Handstück übertragen wird, eine seitliche Kavität im Zahn auszuarbeiten. Die Größe der Amplituden der Oszillationsbewegungen ist im Sinne einer Vibration verhältnismäßig klein, wobei die Frequenz vorzugsweise im Ultraschallbereich liegt. Bei dieser bekannten Ausgestaltung ist der Bearbeitungsabschnitt ein Bearbeitungskopf, der bezüglich des Werkzeugschaftes verdickt ist und dessen Querschnittsform zu seinem freien Ende hin konvergiert. Auf der dem seitlichen Bearbeitungsabschnitt gegenüberliegenden Seite weist das Werkzeug eine glatte Fläche auf. Hierdurch ist das bekannte Werkzeug geeignet, eine Kavität im approximalen Bereich des Zahns einzuarbeiten. Bei diesem Einarbeitungsvorgang wird der Bearbeitungsabschnitt vorzugsweise von okklusal nach zervikal eingesenkt. Dabei kann die Kavität durch ein Rotationswerkzeug bereits vorgearbeitet sein, oder sie kann auch mit dem Bearbeitungsabschnitt ohne Vorarbeitung ausgearbeitet werden. Hierbei bleibt der benachbarte Zahn unbeeinträchtigt, da die dem Bearbeitungsabschnitt gegenüberliegende glatte Fläche den benachbarten Zahn nicht beschädigt. Die Abrasivität der wirksamen Arbeitsflächen des Bearbeitungsabschnitts wird durch einen Besatz von aneinanderliegenden kleinen Körnern aus hartem Material, vorzugsweise aus Diamant, geschaffen. Im Funktionsbetrieb erweisen sich die kleinen harten Körner als eine Vielzahl von Schneiden, wobei die jeweils vorhandenen Arbeitsflächen im wesentlichen ganzflächig wirksam sind.

Das Werkzeug gemäß WO 96/14024 weist quer zueinander gerichtete Arbeitsflächen auf, z.B. wenigstens eine sich in seine Längsrichtung erstreckende Arbeitsfläche und eine sich quer dazu erstreckende Stirnfläche, und es ist aufgrund eines Antriebs mit räumlichen Amplituden dazu eingerichtet, nicht nur Oberflächen zu bearbeiten, wie es bei Feilen üblich ist, sondern auch Löcher bzw. Kavitäten, insbesondere Sacklöcher einzuarbeiten.

Die Amplituden der Oszillationsbewegungen des Bearbeitungsabschnitts im Funktionsbetrieb können durch räumliche kreisförmige oder ellipsenförmige Bewegungen im Sinne der Vibration ausgeführt werden. Um beim Herausziehen des Werkzeugs aus der Kavität ein Klemmen zu vermeiden, weist der Bearbeitungsabschnitt eine zu seinem freien Ende hin konvergente Querschnittsform auf.

Außerdem sind Feilen zur spanabhebenden Oberflächenbehandlung von Zähnen bekannt geworden, die eine abrasive Arbeitsfläche auf einer Seitenfläche eines sich längs eines Werkzeugschafts erstreckenden Feilenblattes aufweisen. Diese bekannten Feilen sind für eine oszillierende Bewegung beträchtlicher Amplitudenlänge, z.B. mehrere Millimeter eingerichtet, wobei die Bewegung in der Längsrichtung des Schaftes gerichtet ist. Diese bekannten Feilen sind nicht dazu geeignet, eine Kavität am Zahn auszuarbeiten, und zwar eignen sie sich insbesondere nicht für eine solche Kavität, die sacklochförmig ist. Dies ist dadurch vorgegeben, daß die bekannte Feile keine sich quer zur Längsrichtung des Schaftes erstreckende Arbeitsfläche aufweist und außerdem eine zugehörige Antriebsvorrichtung nicht für quer zur Längsrichtung des Schafts gerichtete Antriebsbewegungen eingerichtet ist. Diese bekannten Feilen werden hauptsächlich zur spanabhebenden Bearbeitung von Überschußmaterialien und zur Bearbeitung der Oberfläche benutzt, und zwar auch im approximalen Zahnbereich, wozu sich sich aufgrund ihrer Ausgestaltung mit einem dünnen Feilenblatt eignen.

In der Praxis sind Bearbeitungen des Körpergewebes oder entsprechender Ersatzmaterialien in verschiedenen Arbeitsstellungen des Werkzeugs bei beengten Raumverhältnissen erforderlich, wie es z.B. im Mundraum eines Patienten der Fall ist. Es bestehen deshalb besondere Forderungen dahingehend, das Werkzeug in unterschiedlichen Positionen positionieren zu können.

Hierzu ist bereits vorgeschlagen worden, eine Einstellvorrichtung in einem Handstück zum Halten eines Werkzeugs zu integrieren, so daß das Werkzeug mit seinem Halter bezüglich des Handstücks in unterschiedlichen Drehstellungen einstellbar und positionierbar ist. Diese Einstellbarkeit reicht in vielen Fällen jedoch nicht aus, um eine günstige Arbeitsposition für das Werkzeug zu erhalten. Außerdem ist es schwierig und aufwendig, eine solche Einstellvorrichtung in das Handstück zu integrieren, da der vorhandene Raum im Endbereich des Handstücks zwecks Vermeidung visueller Beeinträchtigungen bei der Handhabung des Handstücks beschränkt ist.

Aus **US 4 353 696 A** sind ein dentales Handstück mit einem Werkzeug und ein Werkzeug der eingangs angegebenen Arten zu entnehmen, die sich für eine Präparation der Schulterfläche einer Zahnkrone eignen. Das Handstück weist einen nach vorne vorragenden Handstückschaft auf, wobei das Werkzeug einen länglichen Bearbeitungsabschnitt aufweist und durch eine Verbindungsvorrichtung mit einem Gelenk mit dem Handstückschaft verbunden ist. Das Gelenk ist eine Konuskupplung, in der das Werkzeug unter Reibwirkung drehbar ist (siehe Sp. 3, Z. 10). Die Drehachse des so gebildeten Drehgelenks erstreckt sich längs zum das Drehgelenk bildenden Schaftabschnitt des Handstückschaftes.

In **DE 42 11 625** A1 ist ein Sicherheitsgriff für eine Wurzelkanalfeile beschrieben, wobei die Wurzelkanalfeile kardanisch bewegbar mit dem Sicherheitshandgriff verbunden ist, um die Anpaßbarkeit der Wurzelkanalfeile an unterschiedliche Handgriffstellungen zu verbessern.

**WO 95/21583** offenbart eine Zahnfeile mit einem flachen Feilenschaft, der in seinem freien Endbereich längs gespalten ist und an beiden Schmalseiten Rastnasen aufweist, mit denen er in Rastausnehmungen lösbar verrastbar ist.

Der Erfindung liegt die Aufgabe zugrunde, bei einem Handstück oder Werkzeug der eingangs angegebenen Arten die Positionierbarkeit des Werkzeugs zu verbessern.

Diese Aufgabe wird durch die Merkmale des Anspruchs 1 gelöst.

Bei den erfindungsgemäßen Ausgestaltungen weist das Werkzeug außerhalb des Bearbeitungsabschnitts oder eines Halters des Werkzeugs ein Gelenkteil auf, das eine Einstellung des Bearbeitungsabschnitts bezüglich einer sich längs oder quer zu seiner Längsachse erstreckenden Gelenkachse ermöglicht. Dabei kann wenigstens eine Arbeitsfläche des Bearbeitungsabschnitts sich längs oder quer zur Gelenkachse erstrecken. Aufgrund dieser Einstellbarkeit läßt sich der Einsatzbereich des Werkzeugs wesentlich erweitern, wobei die Handhabbarkeit verbessert wird und schwierig zugängliche Stellen am zu bearbeitenden Gegenstand erreicht werden können, z.B. bei einem dentalmedizinischen Werkzeug im approximalen Zahnbereich und/oder im zervikalen Bereich, insbesondere bei Ausarbeitungen im Zahnfleischrandbereich.

Es ist in vielen Fällen vorteilhaft, vorliegende abrasive Bearbeitungen zum einen wegen besonderer Positionen der zu bearbeitenden Behandlungsstelle und/oder wegen besonderer Formgebungen der Behandlungsstelle mit Werkzeugen zu bearbeiten, die sich hinsichtlich ihrer Form und Größe unterscheiden. In solchen Fällen ist jeweils ein passendes Werkzeug nach vorheriger Entfernung eines anderen Werkzeugs mit dem Halter für das Werkzeug zu verbinden.

Der Erfindung bezieht sich auf darauf, ein vorliegendes Handstück so auszugestalten, daß es in einfacher Weise mit dem Werkzeug verbindbar ist. Bei der erfindungsgemäßen Ausgestaltung nach Anspruch 4 läßt sich das Werkzeug handhabungsfreundlich und schnell mit dem Halter des Handstücks verbinden und lösen, wobei sowohl bei größeren Amplituden, wie es bei herkömmlichen hin und her bewegten Feilen der Fall ist, als auch bei kleinen Amplituden mit einer hohen Frequenz, vorzugsweise im Schall- oder Ultraschallbereich, und kurzen Schwingungen im Sinne einer Vibration der Fall ist, eine sichere Halterung des Werkzeugs erreichbar ist.

Der Erfindung bezieht sich im weiteren darauf, ein vorliegendes Handstück oder Werkzeug so auszugestalten, daß es eine größere Arbeitskapazität aufweist oder die Bearbeitungsstelle mit einem geringeren Handhabungsaufwand bearbeitet werden kann.

Bei der erfindungsgemäßen Weiterbildung nach Anspruch 9 oder 16 weist das Werkzeug mehrere Bearbeitungsabschnitte auf, die gleich oder unterschiedlich ausgebildet sein können, z.B. hinsichtlich ihrer Form und/oder Größe. Hierdurch steht nicht nur mehr Werkzeugsubstanz zur Verfügung, wodurch die Standzeit des Werkzeugs verlängert wird, sondern es lassen sich auch für unterschiedliche Formen und/oder Größen der Bearbeitungsstelle geeignete Bearbeitungsabschnitte in Arbeitungsstellung bringen, wodurch die Handhabung wesentlich vereinfacht wird und die Effizienz wesentlich vergrößert wird.

Bei allen erfindungsgemäßen Ausgestaltungen ist außerdem zu berücksichtigen, daß die Qualität der Arbeit verbessert werden kann, weil aufgrund der vereinfachten Handhabung die Aufmerksamkeit der behandelten Person sich vermehrt auf die Behandlung richten kann und die Bearbeitung mit ergonomisch leichteren Bewegungen ausgeführt werden können.

In den Unteransprüchen sind Merkmale enthalten, die zu einfachen, kleinen und kostengünstig herstellbaren Bauweisen sicherer Funktion führen, die Handhabung weiter vereinfachen und die Leistungsfähigkeit weiter verbessern, sowie sich für spezielle Bearbeitungen insbesondere im approximalen und zerfikalen Zahnbereich eignen.

Nachfolgend werden die Erfindung und weiter durch sie erzielbare Vorteile anhand von vorteilhaften Ausgestaltungen und Zeichnungen näher erläutert. Es zeigt
- Fig. 1: ein erfindungsgemäßes Werkzeug mit einem Handstück in seiner Arbeitsstellung im approximalen Bereich einer Zahnreihe in der Draufsicht;
- Fig. 2: das Werkzeug nach Fig. 1 in der Seitenansicht von rechts in abgewandelter Ausgestaltung und in vergrößerter Darstellung;
- Fig. 3: den Schnitt III-III in Fig. 2;
- Fig. 4: ein erfindungsgemäßes Werkzeug mit Handstück nach Fig. 1 in abgewandelter Ausgestaltung;
- Fig. 5: das Werkzeug nach Fig. 4 in der Seitenansicht von rechts.

Das allgemein mit 1 bezeichnete Werkzeug weist einen Werkzeugschaft oder ein Basisteil 2 auf, das mit einem Bearbeitungsabschnitt 3 verbunden ist und mit einem zusätzlichen Verbindungsteil 4a ausgebildet ist, das Teil einer Verbindungsvorrichtung 4 ist und mittels dieser mit einem korrespondierenden Verbindungsteil 4b eines Halters 5 eines Handstücks 6 verbindbar ist, das zur Halterung und Führung des länglichen Werkzeugs 1 bei der Bearbeitung dient. Von dem Handstück 6 ist lediglich der vordere Teil eines Gehäuses 7 dargestellt, in dem ein den Halter 5 bildender Handstückschaft 8 gelagert ist, der vom Gehäuse 7 vorragt und durch einen im Gehäuse 7 angeordneten Schwingungserzeuger 9 in oszillierende Schwingungen versetzbar ist, deren Amplituden etwa längs der Längsachse 11 des Basisteils 2 gerichtet sein können. Sie können aber auch in unterschiedliche Richtungen weisen und flächig bzw. kreisförmig oder räumlich gerichtet sein..

Der Bearbeitungsabschnitt 3 ist ein längliches und flaches Bauteil in Form eines Schwertes, das auf einer oder auf beiden Breitseiten eine abrasive Arbeitsfläche 12 aufweist, die in an sich bekannter Weise durch den Besatz mit einer Vielzahl von vorzugsweise aneinanderliegenden kleinen harten Körnern aus hartem Material, vorzugsweise aus Diamant, gebildet ist und z.B. körnig diamantiert sein kann. Die abrasive Schicht soll vorzugsweise stufenlos in die benachbarten Bereiche der Arbeitsfläche übergehen. Es ist deshalb vorteilhaft, den abrasiven Belag in einer Vertiefung oder Ausnehmung entsprechend versenkt anzuordnen bzw. aufzubringen.

Mit Blickrichtung auf die Breitseite der Arbeitsfläche 12 bzw. des Bearbeitungsabschnitts 3 ist dessen freies Ende gerundet. Mit Blickrichtung auf die Schmalseite kann sich der Bearbeitungsabschnitt 3 gerade oder gekrümmt erstrecken, wobei die Arbeitsfläche 12 auf konkaven oder auf der konvexen Seite oder beidseitig angeordnet sein kann.

Die Verbindungsvorrichtung 4 ist eine Schnellschlußverbindung, insbesondere eine Schnapp- oder Verrastungsverbindung V, die durch einen gewissen Kraftaufwand zusammendrückbar und auch wieder lösbar ist. Hierzu ist wenigstens eine elastisch ausbiegbare oder dehnbare Verrastungsnase vorgesehen, die in der Befestigungsstellung eine Verrastungsausnehmung hintergreift. Bei der vorliegenden Ausgestaltung ist eine Steckfassung 10 in Form einer kugelabschnittförmigen Kalotte 13 vorgesehen, deren Tiefe größer bemessen ist, als deren Radius. Das korrespondierende Befestigungsteil 4b am Halter 5 bzw. am Handstückschaft 8 ist durch einen Kugelkopf 14 eines Schalters 4c gebildet, der in seiner Größe und Form so ausgebildet ist, daß er mit geringem Bewegungsspiel oder mit einer Klemmkraft in die Kalotte 13 einsteckbar ist. Damit der Rand der Kalotte 13 beim Einstecken ausweichen kann, besteht das Basisteil 2 entweder aus elastisch dehnbarem oder aus elastisch biegbaren Material, wobei im zweiten Falle der Rand der Kalotte 13 durch wenigstens einen, hier drei, Radialschlitze 15 in Segmente 16 unterteilt ist, die radial elastisch aus- und einbiegbar sind und in der eingesteckten Position den Kugelkopf 14 hintergreifen. Bei der vorliegenden Ausgestaltung ist die Kalotte in einem runden Materialansatz 17 angeordnet, wodurch sich eine Steckbuchse ergibt, deren Wandung in Segmente 16 unterteilt ist. Die Verbindungsvorrichtung 4 ist somit durch eine Klemmbuchse gebildet. Vorzugsweise ist die Kalotte 13 in ihrer Größe soviel kleiner bemessen, als der Kugelkopf 14, daß sie in der eingesteckten Stellung eine Klemmkraft auf den Kugelkopf 14 ausübt. Die Klemmkraft oder Schwergängigkeit ist so groß bemessen, daß das Werkzeug 1 nur mit einer gewissen Schwenkkraft verstellt werden kann. Das so gebildete Gelenk 18 ist somit in der Lage einen Mindestdrehmoment zu übertragen, wobei es einen erforderlichen Andruck der Arbeitsfläche 12 an der Arbeitsstelle gewährleistet. Hierdurch ist auch eine Rutschkupplung 19 gebildet, die bei Überschreitung eines bestimmten übertragbaren Drehmoments durchrutscht und somit die Drehmomentübertragung begrenzt und Beschädigungen am Zahn oder am Werkzeug 1 verhindert, die z.B. bei einer Bewegung des Handstücks und des Werkzeugs 1 im Sinne einer Hebelwirkung auf den Zahn ausgeübt werden könnten. Die Rutschkupplung 19 bildet somit auch eine Sicherheitsvorrichtung.

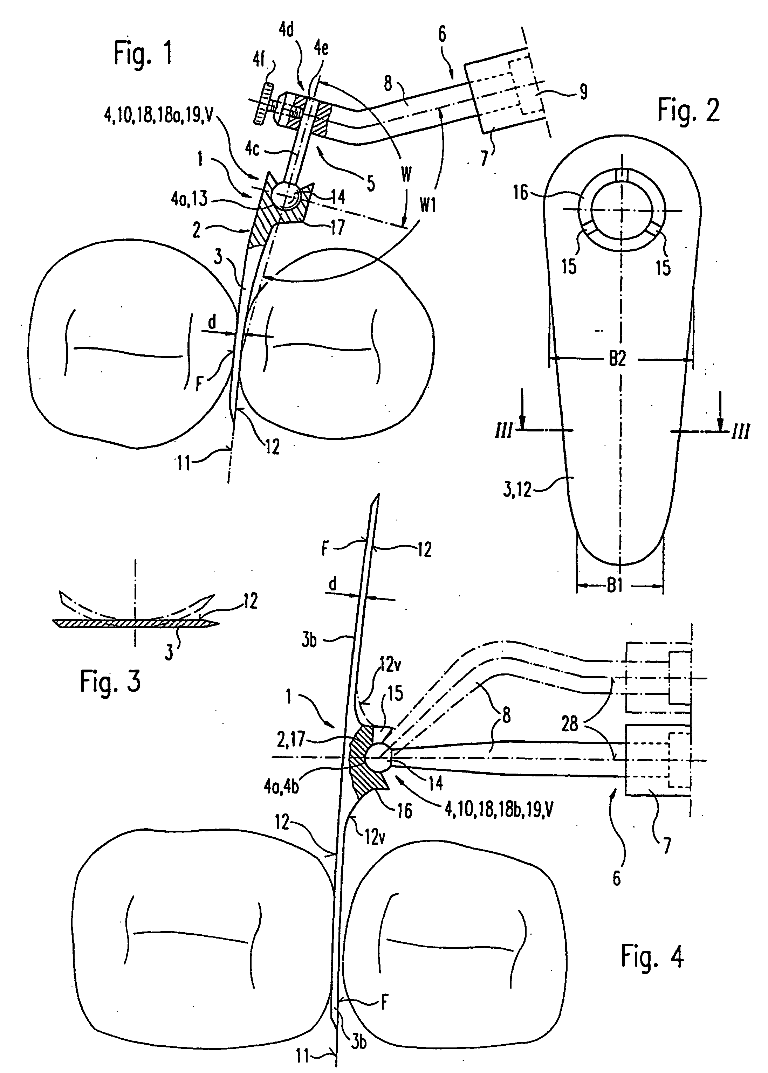

Das Gelenk 18 hat einen begrenzt räumlichen Schwenkbereich von bis etwa 75°, insbesondere bis etwa 60°, jeweils von seiner mittleren Stellung aus. Bei einer Schwenkendstellung gem. Fig. 4, bei der der Werkzeugschaft 4c oder Handstückschaft 8 am Materialansatz 17 anliegt, werden forcierte Schwingungen auf den Bearbeitungsabschnitt übertragen.

Das Verbindungsvorrichtungsteil 4a kann mit seiner Mittelachse 11 in der Längsrichtung des Bearbeitungsabschnitts 3 oder quer dazu angeordnet sein, und zwar innerhalb des gegebenen Winkelbereichs W von etwa 90°.

Die Länge des Bearbeitungsabschnitts 3 ist etwas größer bemessen, als eine Zahnhöhe oder eine Zahnbreite, so daß von der Seite oder von oklusal her der Bearbeitungsabschnitt 3 einen Zahn zu hintergreifen vermag. Es ist von Vorteil, die Länge des Bearbeitungsabschnitts 3 ein paar Millimeter länger zu bemessen als die Zahnhöhe, so daß der Bearbeitungsabschnitt 3 auch im außenseitigen Bereich eines Zahns in die Zahntasche (Fig. 6) eingeführt werden kann, um z.B. eine Paradontose-Behandlung durchzuführen. Hierzu eignet sich der Bearbeitungsabschnitt 3 aufgrund seiner Schwert- bzw. Blattform ebenfalls.

Wie Fig. 2 zeigt, ist der Bearbeitungsabschnitt 3 mit Blickrichtung auf seine Breitseite zu seinem freien Ende hin konvergent geformt, wobei seine brauchbaren Breiten B1 und B2 etwa 1,5 bis 2,5 mm und 3,5 bis 4,5 mm betragen kann. Die Dicke d des Blattes kann etwa 0,5 bis 1 mm betragen. Die Länge L kann etwa 8 bis 15 mm betragen, insbesondere etwa 8 bis 10 mm. Mit Blickrichtung auf die Schmalseite kann der Bearbeitungsabschnitt 3 sich zu seinem freien Ende hin keilförmig (Fig. 1) oder parallel (Fig. 4) erstrecken. In beiden Fällen ist es vorteilhaft, im Übergangsbereich zum Materialansatz 17, die die Dicke des Bearbeitungsabschnitts 3 mit einem divergent gekrümmten Arbeitsflächenabschnitt 12v zu verstärken, dessen Rundung an die Rundung eines Zahns etwa angepaßt ist. Hierdurch können auch benachbarte Flächenbereiche des jeweils vorhandenen Zahns gleichzeitig bearbeitet werden.

Wie Fig. 3 zeigt, können die Stirnflächen des blattförmigen Bearbeitungsabschnitts 3 beidseitig oder einseitig angespitzt sein. Letzteres vorzugsweise auf der Seite, die der Arbeitsfläche 12 abgewandt ist.

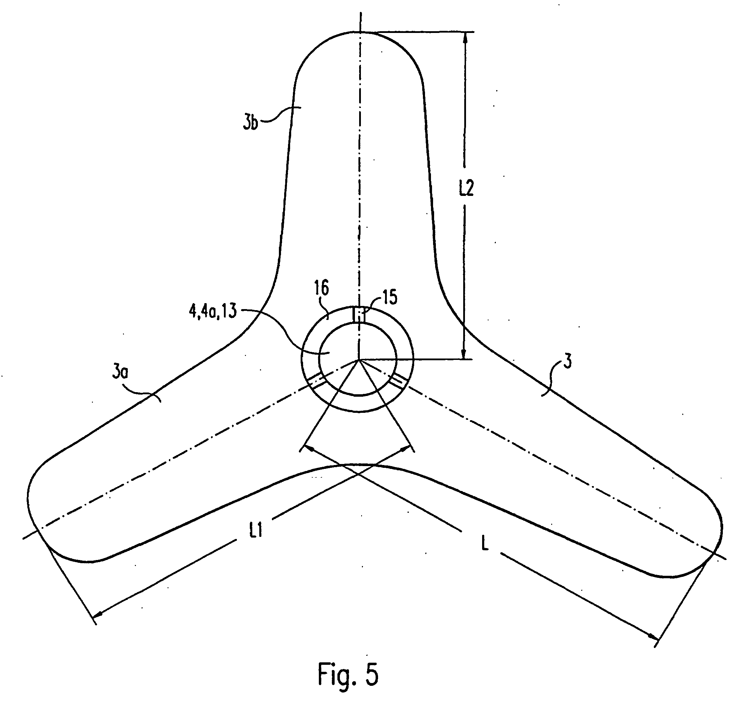

Es ist vorteilhaft, am Basisteil 2 mehrere Bearbeitungsabschnitte 3 anzuordnen, die voneinander abstehen und/oder in unterschiedliche Richtungen weisen, z.B. sternförmig angeordnet sind. Bei der Ausgestaltung gemäß Fig. 5 sind drei Bearbeitungsabschnitte 3, 3a, 3b vorgesehen, die bezüglich ihrer Größe und/oder Form, insbesondere ihrer Länge L, L1, L2 und/oder Dicke, unterschiedlich ausgebildet sein können.

Das Werkzeug 1 kann mit seinem Basisteil 2 und seinem wenigstens einen Bearbeitungsabschnitt 3 aus elastisch biegsamen Stahl wie Federstahl oder Gummi oder Kunststoff bestehen. Die Arbeitsfläche 12 kann bei allen Ausführungsbeispielen mit Aluminiumoxyd oder Diamatkörnern (diamantisiert) besetzt sein.

Wenn der Bearbeitungsabschnitt 3 nur auf einer Breitseite abrasiv ist, ist bei einem Werkzeug 1, das für den approximalen Zahnbereich bestimmt ist, die Rückenfläche auf der gegenüberliegenden Breitseite eine glatte Fläche F, wodurch der benachbarte Zahn unbeeinträchtigt bleibt. Beim Vorhandensein eines Gelenks 18a mit einer Gelenkachse, die etwa in der Längsrichtung des Bearbeitungsabschnitts 3 gerichtet ist, kann der Bearbeitungsabschnitt 3 durch drehen jeweils so eingestellt werden, daß die Arbeitsfläche 12 nach hinten oder nach vorne hin gerichtet ist. Hierdurch ist es möglich, den Bearbeitungsabschnitt 3 an die vordere oder hintere Seite eines Zahns anzupassen und diese Seiten zu bearbeiten. Bei der Ausgestaltung nach Fig. 4 können einander in Umfangsrichtung folgende oder einander gegenüberliegende Bearbeitungsabschnitte 3a, 3b bezüglich ihrer glatten Fläche F umgekehrt ausgebildet sein, so daß der eine Bearbeitungsabschnitt 3a vorne und der andere Bearbeitungsabschnitt 3b hinten seine Arbeitsfläche 12 aufweist und auf der jeweils gegenüberliegenden Seite die glatte Fläche F vorhanden ist. Da bei dieser Ausgestaltung die Drehachse des Gelenks 18b quer zur Längsrichtung 11 des Bearbeitungsabschnitts 3 gerichtet ist, kann hier der jeweils gewünschte Bearbeitungsabschnitt 3 in seine Arbeitsstellung geschwenkt werden.

Im Rahmen der Erfindung ist es möglich, das Werkzeug 1 gemäß Fig. 1 mit einem zum Werkzeug 1 zugehörigen Schaft 4c zweistückig auszubilden, wobei eine Verbindungsvorrichtung 4d zwischen dem Werkzeugschaft 4c und dem Handstückschaft 8 zur Halterung des Werkzeugs 1 vorzusehen ist. Bei der Ausgestaltung nach Fig. 1 ist eine solche Verbindungsvorrichtung 4d durch ein sich längs oder quer im Werkzeugschaft 8 erstreckendes Aufnahmeloch 4e gebildet, in das Werkzeugschaft 4c einsteckbar und sicherbar ist, mittels einer Klemmschraube 4f, die gemäß Fig. 1 stirnseitig in ein entsprechendes Gewindeloch im Handstückschaft 8 eingeschraubt ist und gegen den Werkzeugschaft 4c drückt. Bei dieser Ausgestaltung ist die Verbindungsvorrichtung 4d zwischen dem Werkzeug 1 und dem Handstückschaft 8 angeordnet. Im Gegensatz dazu ist bei der Ausgestaltung gemäß Fig. 4 die Verbindungsvorrichtung 4 zwischen dem Werkzeug 1 und dem Handstückschaft 8 angeordnet. Wie Fig. 4 ebenfalls zeigt, kann dabei der Werkzeugschaft 8 sich gerade erstrecken oder er kann zu einer Seite hin ausgebogen oder abgewinkelt sein, wobei der Endabschnitt 27 sich vorzugsweise so weit über die Mittelachse 28 hinaus erstreckt, daß das Verbindungsteil 4b einen radialen Abstand von der Längsachse 28 aufweist.

Das erfindungsgemäße Werkzeug 1 eignet sich zur spanabhebenden Bearbeitung von insbesondere festem Körpergewebe wie Knochen oder Zähnen des menschlichen oder tierischen Körpers oder einem Ersatzmaterial, wie es für Prothesen oder Zahnfüllungen verwendet wird, z.B. Kunststoff oder Metall.

Die Verbindungsvorrichtung 4 oder Verrastungsvorrichtung V ermöglicht es mehrere unterschiedliche Werkzeuge 1 oder Bearbeitungsabschnitte 3 handhabungsfreundlich und schnell am Handstück zu bestücken bzw. auszutauschen. Die Bearbeitungsabschnitte 3 können sich bezgl. ihrer Form und/oder Größe und/oder der Abtragsfähigkeit ihrer Arbeitsfläche 12 im Sinne von fein und grob oder fein, mittel und grob unterscheiden.

Das oder die erfindungsgemäßen Werkzeuge 1 oder Bearbeitungsabschnitte 3 können zur Überschußentfernung und Vorpolitur insbesondere nach der Erstellung von Kompositfüllungen und im übrigen auch im zahnfleischnahen Bereich und unter dem Zahnfleisch eingesetzt werden.

## Patentansprüche

1. Medizinisches oder dentalmedizinisches Handstück (6) mit einem Werkzeug (1) zur spanabhebenden Bearbeitung von Körpergewebe oder einem Ersatzmaterial,
- wobei das Handstück (6) ein Gehäuse (7) und einen darin gelagerten Handstückschaft (8) aufweist, der durch einen im Gehäuse (7) angeordneten Schwingungsantrieb (9) in Vibration, insbesondere mit einer Frequenz im Schalloder Ultraschallbereich, versetzbar ist,
- wobei der Handstückschaft (8) vom Gehäuse (7) vorragt,
- wobei das Werkzeug (1) einen langgestreckten Bearbeitungsabschnitt (3) aufweist, der sich von einem Basisteil (2) erstreckt, das durch eine lösbare Verbindungsvorrichtung (4) mit dem Handstückschaft (8) verbunden ist,
- und wobei der Verbindungsvorrichtung (4) ein Gelenk (18, 18a, 18b) zugeordnet ist,
**dadurch gekennzeichnet,**
**daß** der Bearbeitungsabschnitt (3) die Form eines Schwertes aufweist,
das auf einer oder beiden Breitseiten eine sich in seiner Längsrichtung erstreckende abrasive Arbeitsfläche (12) aufweist,
und **daß** das Gelenk (18, 18a, 18b) allseitig begrenzt beweglich ist.

2. Handstück nach Anspruch 1,
**dadurch gekennzeichnet,**
**daß** das Gelenk (18a, 18b) durch ein Kugelgelenk gebildet ist.

3. Handstück nach Anspruch 1 oder 2,
**dadurch gekennzeichnet,**
**daß** der Bewegungsbereich des Gelenks (18a, 18b) bezüglich der Mittelstellung bis etwa 75° oder bis etwa 60° beträgt.

4. Handstück nach einem der vorherigen Ansprüche,
**dadurch gekennzeichnet,**
**daß** die Verbindungsvorrichtung (4) durch eine manuell überdrückbare Verrastungsvorrichtung (V) gebildet ist.

5. Handstück nach Anspruch 4,
**dadurch gekennzeichnet,**
**daß** das Gelenk (18, 18a, 18b) und die Verbindungsvorrichtung (4) durch die Verrastungsvorrichtung (V) gebildet sind.

6. Handstück nach einem der vorherigen Ansprüche,
**dadurch gekennzeichnet,**
**daß** das Gelenk (18, 18a, 18b) schwergängig ist und ein Drehmoment überträgt, wobei bei einer Überschreitung eines bestimmten Drehmomentes die beiden Gelenkteile relativ zueinander verrutschen und eine Rutschkupplung (19) bilden.

7. Handstück nach einem der vorherigen Ansprüche,
**dadurch gekennzeichnet,**
**daß** das Gelenk (18, 18a, 18b) durch einen Kugelkopf (14) gebildet ist, der in einer kugelabschnittförmigen Kalotte (13) mit Bewegungsspiel oder schwergängig sitzt, wobei deren freier Rand oder in dessen Bereich angeordnete Rastnasen den Kugelkopf (14) elastisch dehnbar oder elastisch ausbiegbar hintergreifen.

8. Handstück oder Werkzeug nach einem der vorherigen Ansprüche,
**dadurch gekennzeichnet,**
**daß** mehrere Bearbeitungsabschnitte (3, 3a, 3b) um die Gelenkachse verteilt angeordnet sind.

9. Handstück nach Anspruch 8,
**dadurch gekennzeichnet,**
**daß** die Bearbeitungsabschnitte (3, 3a, 3b) hinsichtlich ihrer Größe und/oder Form unterschiedlich ausgebildet sind.

10. Handstück nach einem der vorherigen Ansprüche,
**dadurch gekennzeichnet,**
**daß** der oder die Bearbeitungsabschnitte (3, 3a, 3b) in der Blickrichtung auf die Schmalseite (Fig. 1) oder im Querschnitt (Fig. 3) gekrümmt ist bzw. sind.

11. Handstück nach einem der vorherigen Ansprüche,
**dadurch gekennzeichnet,**
**daß** die Breitseiten des oder der Bearbeitungsabschnitte (3, 3a, 3b) quer zur Mittelachse des Gelenks angeordnet sind.

12. Handstück nach einem der vorherigen Ansprüche,
**dadurch gekennzeichnet,**
**daß** die freien Enden des oder der Bearbeitungsabschnitte (3, 3a, 3b) in der Blickrichtung auf eine Breitseite konvex gerundet ist bzw. sind

13. Handstück oder Werkzeug nach einem der vorherigen Ansprüche,
**dadurch gekennzeichnet,**
**daß** der oder die Bearbeitungsabschnitte (3, 3a, 3b) auf einer Breitseite abrasiv und auf der anderen Breitseite eine glatte Fläche (F) aufweisen

14. Handstück oder Werkzeug nach einem der vorherigen Ansprüche 9 bis 13,
**dadurch gekennzeichnet,**
**daß** die Bearbeitungsabschnitte (3, 3a, 3b) unterschiedliche Dicken (d) und/oder Längen (L, L1, L2) aufweisen.

15. Werkzeug (1) zur spanabhebenden Bearbeitung von Körpergewebe oder einem Ersatzmaterial, für ein medizinisches oder dentalmedizinisches Handstück (6), das ein Gehäuse (7) und einen darin gelagerten Handstückschaft (8) aufweist, der durch einen im Gehäuse (7) angeordneten Schwingungsantrieb (9) in Vibration, insbesondere mit einer Frequenz im Schall- oder Ultraschallbereich, versetzbar ist,
- wobei der Handstückschaft (8) vom Gehäuse (7) vorragt,
- wobei das Werkzeug (1) einen länglichen Bearbeitungsabschnitt (3) aufweist, der sich von einem Basisteil (2) erstreckt, das ein Verbindungsteil (4a) aufweist, das lösbar mit einem Verbindungsteil (4b) am Handstück (6) verbindbar ist,
- wobei das Verbindungsteil (4a) ein Gelenkteil bildet,
**dadurch gekennzeichnet,**
**daß** der Bearbeitungsabschnitt (3) die Form eines Schwertes aufweist,
das auf einer oder beiden Breitseiten eine sich in seiner Längsrichtung erstreckende abrasive Arbeitsfläche (12) aufweist,
und **daß** das Verbindungsteil (4a) durch eine kugelabschnittförmige Kalotte (13) im Basisteil (2) gebildet ist, die quer zur Längsrichtung des Bearbeitungsabschnitts (3) oder in die der Schwertspitze abgewandten Richtung offen ist, wobei der Rand der Kalotte (13) oder in dessen Bereich angeordnete Rastnasen elastisch dehnbar oder ausbiegbar sind zum Hintergreifen eines als Kugelkopf (14) ausgebildeten korrespondierenden Verbindungsteils (4b) am Handstückschaft (6).

16. Handstück nach Anspruch 15,
**dadurch gekennzeichnet,**
**daß** mehrere Bearbeitungsabschnitte (3, 3a, 3b) um die Gelenkachse verteilt angeordnet sind.

17. Werkzeug nach Anspruch 16,
**dadurch gekennzeichnet,**
**daß** die Bearbeitungsabschnitte (3, 3a, 3b) hinsichtlich ihrer Größe und/oder Form unterschiedlich ausgebildet sind.

18. Werkzeug nach einem der vorherigen Ansprüche 15 bis 17,
**dadurch gekennzeichnet,**
**daß** die Breitseiten des oder der Bearbeitungsabschnitte (3, 3a, 3b) quer zur Gelenkachse angeordnet sind.

19. Werkzeug nach einem der vorherigen Ansprüche 15 bis 18,
**dadurch gekennzeichnet,**
**daß** die freien Enden des oder der Bearbeitungsabschnitte (3, 3a, 3b) in der Blickrichtung auf eine Breitseite konvex gerundet ist bzw. sind.

20. Werkzeug nach einem der vorherigen Ansprüche 15 bis 19,
**dadurch gekennzeichnet,**
**daß** die schmalseitigen Kanten des oder der Bearbeitungsabschnitte (3, 3a, 3b) einseitig oder beidseitig spitz verlaufen.

21. Werkzeug nach einem der vorherigen Ansprüche 15 bis 20,
**dadurch gekennzeichnet,**
**daß** der oder die Bearbeitungsabschnitte (3, 3a, 3b) in der Blickrichtung auf die Schmalseite (Fig. 1) oder im Querschnitt (Fig. 3) gekrümmt ist bzw. sind.

22. Werkzeug nach einem der vorherigen Ansprüche 15 bis 21,
**dadurch gekennzeichnet,**
**daß** der oder die Bearbeitungsabschnitte (3, 3a, 3b) auf einer Breitseite abrasiv und auf der anderen Breitseite eine glatte Fläche (F) aufweisen.

23. Werkzeug nach einem der vorherigen Ansprüche 15 bis 22,
**dadurch gekennzeichnet,**
**daß** die Bearbeitungsabschnitte (3, 3a, 3b) auf unterschiedlichen Seiten abrasiv sind und glatte Fläche (F) aufweisen.

24. Werkzeug nach einem der vorherigen Ansprüche 15 bis 23,
**dadurch gekennzeichnet,**
**daß** die Bearbeitungsabschnitte (3, 3a, 3b) unterschiedliche Dicken (d) und/oder Längen (L, L1, L2) aufweisen.

## Claims

1. Medical or dental-medical handpiece (6) having a tool (1) for the material removing working of body tissue or an artificial material,
- the handpiece (6) having a housing (7) and a handpiece shaft (8) mounted therein which can be set into vibration, in particular with a frequency in the sonic or ultrasonic range, by means of an oscillation drive (9) arranged in the housing (7),
- the handpiece (8) projecting from the housing (7),
- the tool (1) having an elongated working section (3) which extends from a base part (2) which base part is connected with the handpiece shaft (8) by means of a releasable connection device (4),
- there being associated with the connection device (4) a joint (18, 18a, 18b),
**characterised in that**,
the working section (3) has the form of a sword, which on one or both broad sides has an abrasive working surface (12) extending in its longitudinal direction,
and **in that** the joint (18, 18a, 18b) is capable of restricted movement in all directions.

2. Handpiece according to claim 1,
**characterised in that**,
the joint (18a, 18b) is formed by means of a ball joint.

3. Handpiece according to claim 1 or 2,
**characterised in that**,
the range of movement of the joint (18a, 18b), with reference to the middle position, is up to about 75° or up to about 60°.

4. Handpiece according to any preceding claim,
**characterised in that**,
the connection device (4) is formed by means of a latching device (V) that can be manually overcome.

5. Handpiece according to claim 4,
**characterised in that**,
the joint (18, 18a, 18b) and the connection device (4) are formed by means of the latching device (V).

6. Handpiece according to any preceding claim,
**characterised in that**,
the joint (18, 18a, 18b) is stiff and transmits a torque, upon a certain torque being exceeded the two joint parts slipping relative to one another and forming a slip clutch (19).

7. Handpiece according to any preceding claim,
**characterised in that**,
the joint (18, 18a, 18b) is formed by means of a ball head (14) which sits in a ball section shaped calotte (13) with play for movement or stiffly, the free edge of which calotte or latching noses arranged in the region thereof engage behind the ball head (14) in an elastically expandable or elastically deflectable manner.

8. Handpiece or tool according to any preceding claim,
**characterised in that**,
there are arranged distributed around the joint axis a plurality of working sections (3, 3a, 3b).

9. Handpiece according to claim 8,
**characterised in that**,
the working sections (3, 3a, 3b) are differently constituted with regard to their size and/or shape.

10. Handpiece according to any preceding claim,
**characterised in that**,
in the direction of view towards the narrow side (Fig. 1), or in cross-section (Fig. 3), the working section or sections (3, 3a, 3b) is or are curved.

11. Handpiece according to any preceding claim,
**characterised in that**,
the broad sides of the working section or sections (3, 3a, 3b) are arranged transversely of the middle axis of the joint.

12. Handpiece according to any preceding claim,
**characterised in that**,
in the direction of view towards a broad side the free ends of the working section or sections (3, 3a, 3b) is or are convexly rounded.

13. Handpiece or tool according to any preceding claim,
**characterised in that**,
that the working section or sections (3, 3a, 3b) on one broad side are abrasive and on the other broad side have a smooth surface (F).

14. Handpiece or tool according to any of preceding claims 9 to 13,
**characterised in that**,
the working sections (3, 3a, 3b) have different thicknesses (D) and/or lengths (L, L1, L2).

15. Tool (1) for the material removing working of body tissue or an artificial material, for a dental or medical-dental handpiece (6) that has a housing (7) and a handpiece shaft (8) mounted therein which can be set into vibration, in particular with a frequency in the sonic or ultrasonic range, by means of an oscillation drive (9) arranged in the housing (7),
- the handpiece shaft (8) projecting from the housing (7),
- the handpiece (1) having an elongate working section (3) which extends from a base part (2) which has a connection part (4a) which is releasably connectable with a connection part (4b) on the handpiece (6),
- the connection part (4a) forms a joint part,
**characterised in that**,
the working section (3) has the shape of a sword,
which on one or both broad sides has an abrasive working surface (12) extending in its longitudinal direction,
and **in that** the connection part (4a) is formed by means of a ball section shaped calotte (13) in the base part (2), which is opened transversely of the longitudinal direction of the working section (3) or in the direction away from the tip of the sword, whereby the edge of the calotte (13) or latching noses arranged in its region are elastically expandable or flexible for engaging behind a corresponding connection part (4b) formed as a ball head (14) on the handpiece shaft (6).

16. Handpiece according to claim 15,
**characterised in that**,
a plurality of working sections (3, 3a, 3b) are arranged distributed around the joint axis.

17. Tool according to claim 16,
**characterised in that**,
the working sections (3, 3a, 3b) are differently constituted with regard to their size and/or shape.

18. Tool according to any of preceding claims 15 to 17,
**characterised in that**,
the broad sides of the working section or sections (3, 3a, 3b) are arranged transversely of the joint axis.

19. Tool according to any of preceding claims 15 to 18,
**characterised in that**,
in the direction of view towards a broad side the free ends of the working section or sections (3, 3a, 3b) is or are convexly rounded.

20. Tool according to any of preceding claims 15 to 19,
**characterised in that**,
the narrow side edges of the working section or sections (3, 3a, 3b) run to a tip on one side or on both sides.

21. Tool according to any of preceding claims 15 to 20,
**characterised in that**,
in the direction of view towards the narrow side (Fig. 1), or in cross-section (Fig. 3), the working section or sections (3, 3a, 3b) is or are curved.

22. Tool according to any of preceding claims 15 to 21,
**characterised in that**,
the working section or sections (3, 3a, 3b) on one broad side are abrasive and on the other broad side have a smooth surface (F).

23. Tool according to any of preceding claims 15 to 22,
**characterised in that**,
the working sections (3, 3a, 3b) are abrasive and have a smooth surface (F) on different sides.

24. Tool according to any of preceding claims 15 to 23,
**characterised in that**,
the working sections (3, 3a, 3b) have different thicknesses (D) and/or lengths (L, L1, L2).

## Revendications

1. Porte-outil médical ou dentaire (6) avec un outil (1) pour le traitement par enlèvement de matière de tissus corporels ou d'un matériau de substitution,
- le porte-outil (6) présentant un boîtier (7) et une tige de porte-outil (8) qui est montée rotative dans le boîtier et qui peut être mise en vibrations au moyen d'un générateur de vibrations (9) disposé dans le boîtier (7), en particulier avec une fréquence dans la plage sonore ou ultrasonore,
- la tige (8) du porte-outil faisant saillie hors du boîtier (7),
- l'outil (1) présentant un segment de traitement (3) allongé, qui s'étend à partir d'une partie de base (2), qui est raccordée par un dispositif de raccordement amovible (4) à la tige (8) du porte-outil,
- et une articulation (18,18a,18b) étant adjointe au dispositif de raccordement (4),
**caractérisé en ce que**,
le segment de traitement (3) présente la forme d'une épée, qui comporte sur un ou sur les deux grands côtés une surface d'usinage abrasive (12) s'étendant dans le sens de sa direction longitudinale,
et **en ce que** l'articulation (18,18a,18b) est mobile de façon limitée sur tous les côtés.

2. Porte-outil selon la revendication 1, **caractérisé en ce que** l'articulation (18a,18b) est formée par une articulation sphérique.

3. Porte-outil selon la revendication 1 ou 2, **caractérisé en ce que** la plage de mouvement de l'articulation (18a, 18b) par rapport à la position médiane s'étend jusqu'à environ 75° ou jusqu'à environ 60°.

4. Porte-outil selon l'une des revendications précédentes, **caractérisé en ce que** le dispositif de raccordement (4) est formé par un dispositif d'enclenchement (V) libérable manuellement.

5. Porte-outil selon la revendication 4, **caractérisé en ce que** l'articulation (18,18a,18b) et le dispositif de raccordement (4) sont formés par le dispositif d'enclenchement (V).

6. Porte-outil selon l'une des revendications précédentes, **caractérisé en ce que** l'articulation (18,18a,18b) est dure et transmet un couple, de sorte que lors d'un dépassement d'un couple déterminé, les deux parties d'articulation glissent l'une par rapport à l'autre et forment un accouplement à glissement (19).

7. Porte-outil selon l'une des revendications précédentes, **caractérisé en ce que** l'articulation (18,18a,18b) est formée par une rotule sphérique (14) qui est logée avec un jeu de mouvement ou à engagement dur dans une calotte en forme de section de sphère (13), de sorte que son bord libre ou des crans d'enclenchement disposés dans sa zone est ou sont en prise par l'arrière avec la rotule sphérique (14) de façon expansible élastiquement ou pliable élastiquement.

8. Porte-outil ou outil selon l'une des revendications précédentes, **caractérisé en ce que** plusieurs segments de traitement (3,3a,3b) sont disposés de façon répartie autour de l'axe d'articulation.

9. Porte-outil selon la revendication 8, **caractérisé en ce que** les segments de traitement (3,3a,3b) sont réalisés de façon différente du point de vue de leur taille et/ou de leur forme.

10. Porte-outil selon l'une des revendications précédentes, **caractérisé en ce que** le ou les segments de traitement (3,3a,3b) est ou sont cintré(s) dans la direction du regard vers le côté étroit (fig. 1) ou en section transversale (fig.3).

11. Porte-outil selon l'une des revendications précédentes, **caractérisé en ce que** les grands côtés du ou des segment(s) de traitement (3,3a,3b) sont disposés transversalement par rapport à l'axe médian de l'articulation.

12. Porte-outil selon l'une des revendications précédentes, **caractérisé en ce que** les extrémités libres du ou des segment(s) de traitement sont arrondies de façon convexe dans la direction du regard vers un grand côté.

13. Porte-outil ou outil selon l'une des revendications précédentes, **caractérisé en ce que** le ou les segment(s) de traitement (3,3a,3b) présente(nt) sur un grand côté une surface abrasive et sur l'autre grand côté une surface lisse (F).

14. Porte-outil ou outil selon l'une des revendications précédentes 9 à 13, **caractérisé en ce que** les segments de traitement (3,3a,3b) présentent des épaisseurs (d) et/ou des longueurs (L,L1,L2) différentes.

15. Outil (1) pour le traitement par enlèvement de matière de tissus corporels ou d'un matériau de substitution, pour un porte-outil (6) médical ou dentaire, qui présente un boîtier (7) et une tige (8) de porte-outil montée rotative dans le boîtier et qui, par un générateur de vibrations (9) disposé dans le boîtier (7), peut être mise en vibrations, en particulier avec une fréquence dans la plage sonore ou ultrasonore,
- la tige (8) du porte-outil faisant saillie hors du boîtier (7),
- l'outil (1) présentant un segment de traitement allongé (3), qui s'étend à partir d'une partie de base (2) qui comporte une partie de raccordement (4a), qui peut être raccordée de façon amovible à une partie de raccordement (4b) sur le porte-outil (6),
- la partie de raccordement (4a) formant une partie d'articulation,
**caractérisé en ce que**
le segment de traitement (3) a la forme d'une épée qui, sur l'un ou les deux grands côtés, présente une surface d'usinage abrasive (12) s'étendant dans sa direction longitudinale,
et **en ce que** la partie de raccordement (4a) est formée par une calotte (13) en forme de section de sphère dans la partie de base (2), qui est ouverte transversalement par rapport à la direction longitudinale du segment de traitement (3) ou dans la direction opposée à la pointe de l'épée, tandis que le bord de la calotte (13) ou des crans d'enclenchement disposés dans sa zone sont élastiquement expansibles ou pliables pour venir en prise par l'arrière contre une partie de raccordement (4b) correspondante agencée en rotule sphérique (14), sur la tige du porte-outil (6).

16. Porte-outil selon la revendications 15, **caractérisé en ce que** plusieurs segments de traitement (3,3a,3b) sont répartis autour de l'axe d'articulation.

17. Outil selon la revendication 16, **caractérisé en ce que** les segments de traitement (3,3a,3b) sont réalisés de façon différente à l'égard de leur taille et/ou de leur forme.

18. Outil selon l'une des revendications précédentes 15 à 17, **caractérisé en ce que** les grands côtés du ou des segments de traitement (3,3a,3b) sont disposés transversalement par rapport à l'axe d'articulation.

19. Outil selon l'une des revendications précédentes 15 à 18, **caractérisé en ce que** les extrémités libres du ou des segments de traitement (3,3a,3b) sont arrondies de façon convexe dans la direction du regard vers un grand côté.

20. Outil selon l'une des revendications précédentes 15 à 19, **caractérisé en ce que** les arêtes des côtés étroits du ou des segments de traitement (3,3a,3b) s'étendent de manière effilée sur un côté ou sur les deux côtés.

21. Outil selon l'une des revendications précédentes 15 à 20, **caractérisé en ce que** le ou les segments de traitement (3,3a,3b) est ou sont cintrés dans la direction du regard vers le côté étroit (fig.1) ou en section transversale (fig.3).

22. Outil selon l'une des revendications précédentes 15 à 21, **caractérisé en ce que** le ou les segments de traitement (3,3a,3b) présente(nt) une surface abrasive sur un grand côté et une surface lisse (F) sur l'autre côté.

23. Outil selon l'une des revendications précédentes 15 à 22, **caractérisé en ce que** les segments de traitement (3,3a,3b) sont abrasifs et présentent une surface lisse (F) sur différents côtés.

24. Outil selon l'une des revendications précédentes 15 à 23, **caractérisé en ce que** les segments de traitement (3,3a,3b) présentent des épaisseurs (d) et/ou des longueurs (L,L1,L2) différentes.
